# EUROPÄISCHE PATENTSCHRIFT

(11) **EP 0 919 063 B1**
(45) Veröffentlichungstag und Bekanntmachung des Hinweises auf die Patenterteilung: **04.07.2001**
(21) Anmeldenummer: 97938768.5
(22) Anmeldetag: 14.08.1997
(51) Int. Cl.: H01F 17/06, H01F 41/00, H01F 41/02

(54) **SCHNITTSTELLEN-ÜBERTRAGER**
INTERFACE TRANSFORMER
TRANSFORMATEUR D'INTERFACE

(30) Priorität: 19.08.1996 DE 19633365
(43) Veröffentlichungstag der Anmeldung: 02.06.1999
(73) Patentinhaber: Vacuumschmelze GmbH, 63450 Hanau (DE)
(72) Erfinder: BINKOFSKI, Johannes, D-63517 Rodenbach (DE); HUNDT, Harald, D-64807 Dieburg (DE); PRINZHAUS, Michael, D-63486 Bruchköbel (DE)
(74) Vertreter: Patentanwälte Westphal, Mussgnug & Partner
(86) Internationale Anmeldenummer: DE9701748
(87) Internationale Veröffentlichungsnummer: WO9808236

(56) Entgegenhaltungen:
- EP-A- 0 175 069
- FR-A- 2 027 142
- US-A- 3 246 627
- US-A- 3 342 754
- DATABASE WPI Section Ch, Week 9541 Derwent Publications Ltd., London, GB; Class A26, AN 95-314771 XP002048443 & JP 07 211 530 A (HITACHI METALS LTD) , 11.August 1995

## Beschreibung

Die Erfindung betrifft ein Bauelement bestehend aus einem Gehäuse und einem darin enthaltenen Übertrager, der zumindest zwei auf einem Magnetkern befindliche übereinandergelegte Übertragerwicklungen aufweist, wobei die Wicklungsenden der Übertragerwicklungen mit den aus dem Gehäuse heraustretenden Anschlüssen verbunden sind und wobei als Magnetkern ein Ringbandkern vorgesehen ist, der aus einer hochpermeablen amorphen oder nanokristallinen Legierung besteht und der mit einem aus der Gasphase abgeschiedenen Polymerfilm als erster Isolierschicht umhüllt ist, auf die die erste Übertragerwicklung aufgewickelt ist,

Aus der JP 7 211 530 A ist bekannt, einen Ringbandkern aus einem nanokristallinen Material mit einer Polymerschicht zu beschichten. Außerdem wird vorgeschlagen, den mit einer Polymerschicht versehenen Ringbandkern für mit Pulsen arbeitende Schnittstellenschaltungen zu verwenden. Die auf dem Ringbandkern aufgebrachte Polymerschicht soll dabei die Hochspannungsfestigkeit des Ringbandkerns erhöhen.

Mit der zunehmenden Verbreitung digitaler Kommunikationsnetze besteht zunehmend das Bedürfnis, Schnittstellenübertrager in großen Stückzahlen zu fertigen. Insbesondere muß ein in großen Stückzahlen herstellbares Bauelement auf einfache Weise herstellbar sein. Das Herstellungsverfahren muß vor allem einfach und wenig fehleranfällig ist, so daß die Ausschußraten niedrig bleiben.

Aus der EP 0 175 069 A ist ferner ein induktives Bauelement und ein Verfahren zu seiner Herstellung bekannt. Bei diesem Verfahren wird zunächst ein Isolierblock mit einer ringförmigen Ausnehmung für die Aufnahme eines Ringbandkerns aus einem amorphen Material gespritzt. Bei der Herstellung des Isolierblocks werden gleichzeitig in die zentrale Erhebung des Isolierblocks Stifte eingespritzt, deren Enden beidseitig aus dem Isolierblock herausragen. Anschließend wird der Ringbandkern in die ringförmige Ausnehmung eingelegt und die aus dem Isolierblock herausragenden Enden der Stifte um den Ringbandkern herum gebogen. Bei diesem Verfahren wird somit das Aufwickeln einer Spule durch einen einfachen Biegevorgang ersetzt.

Aus der FR 2 027 142 A ist ferner ein Verfahren zur Nachbehandlung von auf Ringkerne aus Ferriten aufgebrachten Polymerschichten bekannt. Dieses Verfahren dient dazu, der Polymerbeschichtung eine andere Farbe als die des Ringkerns zu geben. Dadurch kann leicht überprüft werden, ob die Polymerbeschichtung den gesamten Ringkern abdeckt.

Ausgehend von diesem Stand der Technik liegt der Erfindung die Aufgabe zugrunde, ein auf einfache Weise herstellbares Bauelement mit kleinen Außenabmessungen zu schaffen.

Erfindungsgemäß wurde die Aufgabe dadurch gelöst, daß die erste Übertragerwicklung mit einer zweiten Isolierschicht umhüllt ist und daß jede weitere Übertragerwicklung auf die zweite Isolierschicht aufgewickelt ist, wobei als zweite Isolierschicht ein mit einem Isolierdeckel versehener Isoliertrog vorgesehen ist.

Durch den Einsatz von Ringbandkernen aus hochpermeablen amorphen oder nanokristallinen Legierungen sind im Gegensatz zu Magnetkernen aus Ferriten wesentlich höhere Sättigungsinduktionen, in der Regel um den Faktor 2 bis 4 höhere Sättigungsinduktionen, verfügbar, die direkt die zulässige Gleichstromvorbelastung bestimmen. Ferner liegt ein Vorteil in der Verwendung von Magnetkernen aus hochpermeablen amorphen oder nanokristallinen Legierungen darin, daß durch die sehr hohe Permeabilität eine Reduktion der Windungszahl und damit in Folge verbesserte Übertragungseigenschaften durch kleinere Parasitärkapazitäten erzielt werden können. Dies resultiert letztendlich in einem gegenüber bekannten Bauelementen wesentlich kleinerem Innenloch des Kerns.

Durch die Isolierung des Ringbandkernes mit einem aus der Gasphase abgeschiedenen Polymerfilm wird eine sehr dünnwandige Isolation unter gleichzeitiger Verfestigung der Ringbandkerne erreicht. Insbesondere werden die magnetischen Eigenschaften der Ringbandkerne nicht beeinträchtigt. Bei anderen Polymerbeschichtungen, z. B. tränken, beträufeln, wirbelsintern etc., werden die magnetischen Eigenschaften der Magnetkerne sehr stark verändert. Dies resultiert aus der Volumenänderung der Polymere während oder nach dem Polymerisationsschritt. Die auftretenden Schrumpfkräfte sowie Druck- und Zugspannungen bewirken wegen der Magnetostriktion der weichmagnetischen Bänder eine Änderung der Bandkerneigenschaften. Insgesamt wird durch die Isolierung durch den aus der Gasphase abgeschiedenen Polymerfilm eine zusätzliche markante Miniaturisierung gegenüber bekannten Bauelementen erreicht.

Ein weiterer Vorteil der erfindungsgemäßen Lösung liegt darin, daß eine wesentlich geringere Bauhöhe als bei den existierenden Schnittstellenübertragern erzielbar ist.

Typischerweise wird der Polymerfilm dadurch hergestellt, daß zuerst unter Unterdruck, d. h. in der Regel unter Vakuum, Monomere auf die Oberflächen des Magnetkerns kondensiert werden und polymerisieren. Zur Erzeugung der Monomere werden Oligomere verdampft und anschließend optisch und/oder thermisch und/oder über ein Plasma zersetzt.

Die besonderen Vorteile des in diesem Verfahren abgeschiedenen Polymerfilms sind einerseits hermetisch dichte Schichten schon ab einigen µm Dicke. Ferner zeichnen sich die Polymerfilme durch hohe Flexibilität und Dehnung und damit geringe Rißanfälligkeit aus. Die Monomere können bei den Ringbandkernen in feinste Hohlräume eindringen, da sie in der gasförmigen Zwischenstufe vorliegen. Effekte durch Oberflächenkräfte wie z. B. bei Lacken treten nicht auf, d. h. es tritt keine Kantenentnetzung bzw. Brückenbildung auf. Ferner haften aus der Gasphase abgeschiedene Polymerfilme auch sehr gut auf glattem Untergrund.

Außerdem ist bei der vorliegenden Erfindung als zweite Isolierschicht ein mit einem Deckel versehener Isoliertrog vorgesehen, wobei der Isoliertrog typischerweise mit lateralen Abstandshaltern versehen ist, wodurch ein ausreichender Mindestabstand zur Herausführung der Primäranschlüsse eingehalten werden kann.

In einer Weiterbildung der vorliegenden Erfindung wird als Polymerfilm ein Poly-Parylene-Film abgeschieden. Typischerweise sind diese Poly-Parylene-Filme Poly-Para-Xylylene-Filme. Parylene ist der allgemeine Oberbegriff für eine Familie organischer Polymere, die sich auf Oberflächen ausbilden, welche bei Unterdruck mit dem verdünnten aktiven Gas behandelt werden. Dabei entstehen lineare, kristalline Polymere, die herausragende physikalische Eigenschaften bezogen auf die Schichtstärke aufweisen und äußerst innert gegen Chemikalien und porenfrei sind.

Typischerweise wird der Übertrager in das Gehäuse mit einer Vergußmasse vergossen.

Zweckmäßigerweise weist das Gehäuse an seiner Unterseite Anschlußpins auf, wobei die Wicklungsenden der Übertragerwicklungen mit den Anschlußpins verbunden sind. Dabei werden die Anschlußenden der Wicklungen im notwendigen Abstand voneinander an die Gehäusepins geführt und kontaktiert.

Typischerweise ist das Gehäuse als oberflächenmontiertes Gehäuses (SMD-Bauelement) ausgeführt, so daß die damit verbundenen Vorteile wie unter anderem kostengünstige Ausführung, genutzt werden.

Die Erfindung ist in der Zeichnung beispielsweise veranschaulicht und im nachstehenden im einzelnen anhand der Zeichnung beschrieben. Es zeigen:
- Figur 1: einen Querschnitt durch ein Bauelement mit einem Isolierdeckel versehenen Isoliertrog,
- Figur 2: eine Draufsicht auf den Isoliertrog aus Figur 1,
- Figur 3: einen Teilschnitt durch ein Bauelement mit einer Isolierfolie und
- Figur 4: einen Querschnitt durch zwei Isolierhalbschalen.

Nach der Zeichnung besteht das Bauelement 13 aus einem Gehäuse 10 und einem Übertrager 12. Der Übertrager besteht aus einem Magnetkern, der hier die Gestalt eines Ringbandkerns 1 aufweist, auf den zwei übereinandergelegte Übertragerwicklungen 3 und 5 aufgewickelt sind.

Die Wicklungsenden der Übertragerwicklungen 3 und 5 sind mit aus dem Gehäuse 10 heraustretenden Anschlüssen verbunden. Diese Anschlüsse sind hier als Anschlußpins 6 ausgeführt, die an der Unterseite des Gehäuses 10 angeordnet sind. Die Wicklungsenden der Übertragerwicklungen 3 und 5 sind mit diesen Anschlußpins 6 verbunden (nicht gezeigt).

Der Ringbandkern 1 ist aus einer hochpermeablen amorphen oder nanokristallinen Legierung hergestellt und mit einer dünnen ersten Isolierschicht 2 versehen. Auf diesen mit der ersten Isolierschicht 2 umhüllten Ringbandkern 1 ist eine erste Übertragerwicklung 3 aufgewickelt, die aus Kupferlackdraht besteht.

Diese erste Übertragerwicklung 3 ist mit einer zweiten Isolierschicht 4 aus Kunststoff umhüllt. Dadurch wird eine hohe Betriebssicherheit im Sinne einer sicheren elektrischen Trennung gewährleistet. Die zweite Isolierschicht 4 aus Kunststoff dient zur elektrischen Trennung des Anschlußpotentials von dem Gerätepotential.

Auf diese zweite Isolierschicht 4 ist eine zweite Übertragerwicklung 5 gewickelt. Es können aber auch noch weitere Übertragerwicklungen auf die zweite Isolierschicht 4 aufgewickelt sein.

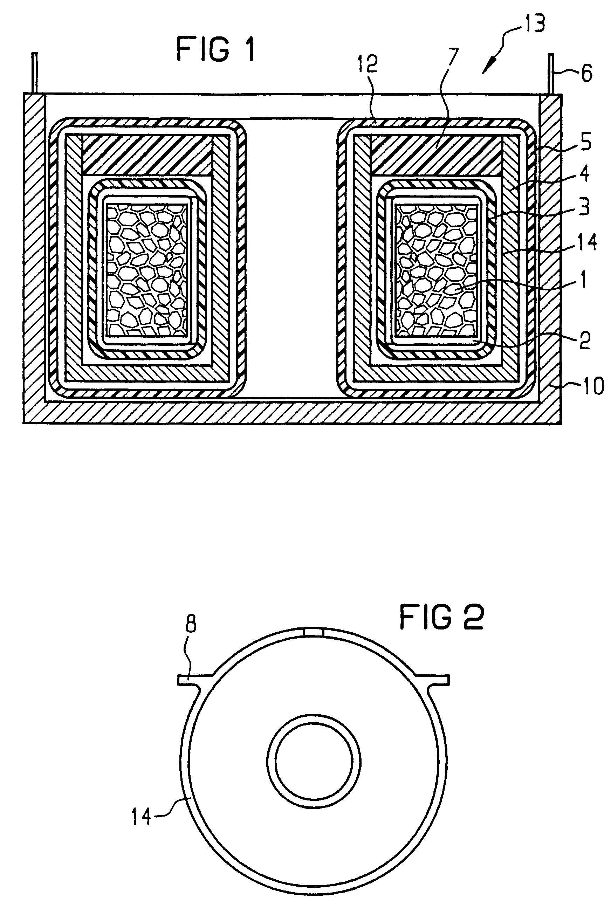

In der Figur 1 ist die zweite Isolierschicht in Form eines Isoliertrogs 4 mit einem Isolierdeckel 10 ausgeführt.

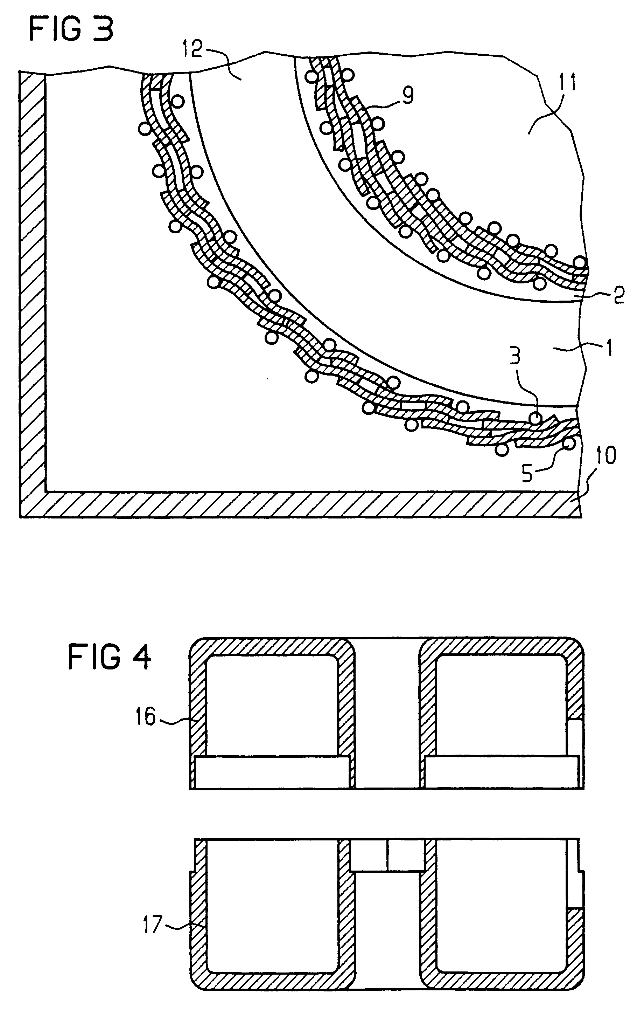

In der Figur 3 ist die zweite Isolierschicht als Isolierfolie 9 ausgeführt, wobei die erste Übertragerwicklung 3 von der zweiten Übertragerwicklung 5 an jeder Stelle durch zumindest zwei Folien der Lagen getrennt ist.

Die Figur 4 schließlich zeigt eine Ausführung für die zweite Isolierschicht 4, bei der diese aus einer oberen Isolierhalbschale 16 und einer unteren Isolierhalbschale 17 zusammengesetzt.

In allen Ausführungsbeispielen ist der Übertrager 12 in das Gehäuse 10 mit einer Vergußmasse 11 vergossen.

Das Gehäuse 10 ist als oberflächenmontiertes Gehäuse (SMD-Bauelement) ausgeführt. Ein nach der Erfindung ausgeführtes Bauelement weist eine Grundfläche von 13,2 x 14 mm mit einer Bauhöhe von 8 mm auf, wobei ein Ringbandkern mit den Abmessungen 9,3 x 5,6 x 2,9 mm aus einer amorphen Legierung verwendet worden ist.

Die in den Figuren 1 und 3 gezeigten Ringbandkerne 1 weisen auf ihren Außenflächen eine Poly-Para-Xylylene-Beschichtung auf.

Diese Poly-Para-Xylylene-Beschichtung wird auf den Ringbandkern auf der Gasphase abgeschieden. Da bei Beginn der Beschichtungsprozeß mit dem Erhitzen von pulverförmigen Di-Para-Xylylene-Dimeren, wodurch diese direkt in den gasförmigen Zustand übergehen, d. h. sublimieren. Als Prozeßparameter haben sich dabei eine Temperatur von ca. 150°C und ein Druck von ca. 1 Torr als besonders geeignet erwiesen.

Danach werden die gasförmigen Di-Para-Xylylene-Dimere bei einer Temperatur von ca. 690°C und einem Druck von ca. 0,5 Torr zu Para-Xylylene-Monomeren thermisch zersetzt (Pyrolyse).

Diese gasförmigen Para-Xylylene-Monomere werden dann in eine Prozeßkammer, in der Regel eine Vakuumkammer geleitet, und verteilen sich dort gleichmäßig und kondensieren auf die Oberflächen 5 und 6 des Ringbandkerns 1 sowie die Hohlräume zwischen den Bandlagen des Ringbandkerns. Danach erfolgt eine Polymerisation und eine Polymerfilmbildung.

Die Dicke des Polymerfilms kann dabei durch die Zufuhr von Para-Xylylene-Monomeren gezielt eingestellt werden. Bei Ringbandkernen hat sich eine Polymerfilmschichtdicke zwischen 5 und 60 µm als besonders geeignet erwiesen.

Da der so entstehende Poly-Para-Xylylene-Film einen Schmelzpunkt von > 275°C aufweist, entsteht eine temperaturstabile Isolationsschicht, so daß der so beschichtete Ringbandkern mit als Bestandteil des induktiven Bauelements einen Lötprozeß entsprechenden Anforderungen an Oberflächen montierte Bauelemente (SMD) ohne Aufschmelzen bzw. Schädigung des Bauelements entsteht.

Insbesondere können so Ringbandkerne mit einem Außendurchmesser zwischen 2 und 15 mm mit einem Bewicklungsschutz versehen werden, welcher im kostengünstigen Trommelverfahren aufgebracht wird.

Die in der Erfindung beschriebenen Polymere sind unter der eingetragenen Marke Galxyl ® von der Firma Technipol, Italien sowie unter den Handelsnamen Parylene von der Firma Novatran, Großbritannien und Alpha mittels Lötsysteme GmbH, Deutschland im Handel erhältlich.

## Patentansprüche

1. Bauelement bestehend aus einem Gehäuse (10) und einem darin enthaltenen Übertrager, der zumindest zwei auf einem Magnetkern befindliche übereinandergelegte Übertragerwicklungen (3,5) aufweist, wobei die Wicklungsenden der Übertragerwicklungen (3,5) mit den aus dem Gehäuse (10) heraustretenden Anschlüssen (6) verbunden sind und wobei als Magnetkern ein Ringbandkern (1) vorgesehen ist, der aus einer hochpermeablen amorphen oder nanokristallinen Legierung besteht und der mit einem aus der Gasphase abgeschiedenen Polymerfilm als erster Isolierschicht (2) umhüllt ist, auf die die erste Übertragerwicklung (3) aufgewickelt ist,
**dadurch gekennzeichnet**, daß die erste Übertragerwicklung (3) mit einer zweiten Isolierschicht (4) umhüllt ist und daß jede weitere Übertragerwicklung (5) auf die zweite Isolierschicht (4) aufgewickelt ist, wobei als zweite Isolierschicht (4) ein mit einem Isolierdeckel (7) versehener Isoliertrog (14) vorgesehen ist.

2. Bauelement nach Anspruch 1,
**dadurch gekennzeichnet**, daß als Polymerfilm ein Poly-Parylene-Film vorgesehen ist.

3. Bauelement nach Anspruch 2,
**dadurch gekennzeichnet**, daß als Poly-Parylene-Film ein Poly-Para-Xylylene-Film vorgesehen ist.

4. Bauelement nach einem der Ansprüche 1 bis 3,
**dadurch gekennzeichnet**, daß der Isoliertrog (14) mit lateralen Abstandshaltern (8) versehen ist.

5. Bauelement nach einem der Ansprüche 1 bis 4,
**dadurch gekennzeichnet**, daß der Übertrager (12) in das Gehäuse (10) mit einer Vergußmasse (11) vergossen ist.

6. Bauelement nach einem der Ansprüche 1 bis 5,
**dadurch gekennzeichnet**, daß das Gehäuse (10) an seiner Unterseite (15) Anschlußpins (6) aufweist und daß die Wicklungsenden der Übertragerwicklungen mit den Anschlußpins (6) verbunden sind.

7. Bauelement nach einem der Ansprüche 1 bis 6,
**dadurch gekennzeichnet**, daß das Gehäuse (10) ein oberflächenmontiertes Gehäuse, ein SMD-Bauelement, darstellt.

## Claims

1. Component consisting of a housing (10) and a transformer contained therein, which has at least two transformer windings (3, 5) placed one above the other on a magnetic core, the winding ends of the transformer windings (3, 5) being connected to terminals (6) protruding from the housing (10), a toroidal core (1) being provided as the magnetic core, which consists of a high-permeability amorphous or nanocrystalline alloy and which is wrapped in a vapour-deposited polymer film used as the first insulating layer (2), on which the first transformer winding (3) is wound,
characterised in that the first transformer winding (3) is wrapped in a second insulating layer (4), and in that each further transformer winding (5) is wound on the second insulating layer (4), an insulating trough (14) with an insulating cover (7) being provided as the second insulating layer (4).

2. Component according to Claim 1, characterised in that a poly-parylene film is provided as the polymer film.

3. Component according to Claim 2, characterised in that a poly-para-xylylene film is provided as the poly-parylene film.

4. Component according to one of Claims 1 to 3,
characterised in that the insulating trough (14) is provided with lateral spacers (8).

5. Component according to one of Claims 1 to 4,
characterised in that the transformer (12) is potted into the housing (10) using a potting resin (11).

6. Component according to one of Claims 1 to 5,
characterised in that the housing (10) has terminal pins (6) on its lower side (15), and in that the winding ends of the transformer windings are connected to the terminal pins (6).

7. Component according to one of Claims 1 to 6,
characterised in that the housing (10) represents a surface mount housing, an SMD component.

## Revendications

1. Composant formé d'un boîtier (10) recevant un transformateur formé d'au moins deux enroulements de transformateur (3, 5) superposés sur un noyau magnétique, les extrémités des enroulements (3, 5) du transformateur étant reliées à des bornes (6) sortant du boîtier (10), et le noyau magnétique étant constitué par un noyau à ruban annulaire (1), formé d'un alliage très perméable amorphe ou de nanocristaux, et qui est enrobé d'un film de polymère déposé à partir de la phase gazeuse comme première couche d'isolation (2), enroulée sur le premier enroulement de transformateur (3),
caractérisé en ce que
• le premier enroulement de transformateur (3) est enveloppé d'une seconde couche isolante (4), et
• chaque autre enroulement de transformateur (5) est enroulé sur la seconde couche isolante (4), la seconde couche isolante (4) comportant une goulotte d'isolation (14) munie d'un couvercle isolant (7).

2. Composant selon la revendication 1,
caractérisé en ce que
le film de polymère est un film de poly-parylène.

3. Composant selon la revendication 2,
caractérisé en ce que
le film de poly-parylène est un film de poly-para-xylylène.

4. Composant selon l'une quelconque des revendications 1 à 3,
caractérisé en ce que
la goulotte isolante (14) est munie d'entretoises latérales (8).

5. Composant selon l'une quelconque des revendications 1 à 4,
caractérisé en ce que
le transformateur (12) est noyé dans le boîtier (10) avec une masse coulée (11).

6. Composant selon l'une quelconque des revendications 1 à 5,
caractérisé en ce que
le boîtier (10) comporte sur sa face inférieure (15), des broches de raccordement (6) et les extrémités des enroulements de transmission sont reliées aux broches (6).

7. Composant selon l'une quelconque des revendications 1 à 6,
caractérisé en ce que le boîtier (10) correspond à un boîtier monté en surface (composant SMD).
